(19) **Europäisches Patentamt / European Patent Office / Office européen des brevets**

(11) **EP 1 434 131 B1**

(12) **EUROPEAN PATENT SPECIFICATION**

(45) Date of publication and mention
of the grant of the patent:
**08.06.2011 Bulletin 2011/23**

(51) Int Cl.:
***G06F 9/50*** *(2006.01)*

(21) Application number: **03103364.0**

(22) Date of filing: **12.09.2003**

(54) **Method for controlling terminal equipment**

Verfahren zum Betrieb eines Endgeräts

Procédé de contrôle de terminal

(84) Designated Contracting States:
**AT BE BG CH CY CZ DE DK EE ES FI FR GB GR
HU IE IT LI LU MC NL PT RO SE SI SK TR**
Designated Extension States:
**LT LV**

(30) Priority: **17.09.2002 FI 20021661**

(43) Date of publication of application:
**30.06.2004 Bulletin 2004/27**

(73) Proprietor: **TeliaSonera Finland Oyj
00510 Helsinki (FI)**

(72) Inventor: **Gurtov, Andrei
01450, Vantaa (FI)**

(74) Representative: **Holmström, Stefan Mikael
Kolster Oy Ab
Iso Roobertinkatu 23,
P.O. Box 148
00121 Helsinki (FI)**

(56) References cited:
**WO-A-00/67124      US-A- 5 428 789
US-A- 5 745 758**

- **VOIGT T ET AL: "Scheduling TCP in the Nemesis
operating system" 2000, NORWELL, MA, USA,
KLUWER ACAD. PUBLISHERS, USA, 2000, pages
63-79, XP009031171 ISBN: 0-7923-8690-6**

**Description**

**BACKGROUND OF THE INVENTION**

**1. Field of the Invention**

This invention relates to controlling the operation of a terminal equipment running a plurality of applications which utilize a common communication link for connections. The invention relates particularly to congestion control of a communication link utilized by a terminal equipment.

**2. Description of the Prior Art**

Prior art terminal equipments offer a user a possibility to simultaneously run several applications utilizing a common communication link for packed switched connections. Measurements show that if the common communication link is relatively slow, as compared with other parts of the communication network, a buffer before this common bottleneck link will in many cases become too large. For instance protocols like TCP (Transmission Control Protocol) will have problems with such large buffers, because the RTT (Round Trip Time) over such a link becomes very large. Additionally, when the user of the terminal equipment clicks from page to page, data buffered in the network becomes obsolete and unnecessarily sent over the common link to the terminal equipment. When a large buffer overflows, it creates a long recovery for TCP and possible unfair sharing of the link among several concurrent connections.

Another problem with prior art solutions is that the user may want to prioritize between the active applications. The user might, for instance, want to give less bandwidth to a background email download and more bandwidth to an interactive web browsing or UDP (User Datagram Protocol) streaming application. Prior art solutions, however, fail to offer the user such a possibility

Previously there is known from the publication VOIGT T ET AL: Scheduling TCP in the Nemesis operating system" 2000, Norwell, MA, USA, Kluwer ACAD. Publishers, USA, 2000, pages 63 - 79, XP009031171 ISBN: 0-7923-8690-6, a solution for reserving bandwidth for applications. In this solution the applications specify in a request their reservations by specifying transmission time. In addition the applications indicate if they want a fair share of the non-allocated part of the transmit bandwidth.

Previously there is also known from JP 9198261 a solution for task scheduling. This solution utilizes a means which sets up the processing priority on a waiting queue for transfer to a peripheral regardless of the scheduling priority over CPU of a task. Such a solution, however, makes it difficult for a user to ensure that all tasks obtain a desired capacity.

Previously there is also known from US - A - 5745758 a system for regulating multicomputer data transfer by allocating time slot to designated processing task according to communication bandwidth capabilities.

**SUMMARY OF THE INVENTION**

An object of the present invention is to improve the user friendliness of a terminal equipment running a plurality of applications which utilize a common communication link for connections, such as data connections.

Another object of the invention is to control a terminal equipment to avoid congestion on a communication link.

Still another object of the present invention is to offer a user of a terminal equipment a possibility to define priorities for active applications with ongoing connections.

The above-mentioned and other objects of the present invention are achieved with the method as defined in claim 1, the terminal equipment as defined in independent claim 5, the program as defined in independent claim 10 and the computer-readable carrier as defined in independent claim 11.

The most significant advantages of the present invention are that congestion situations and extensive buffering of data can be avoided when each application run by a terminal equipment is assigned a specific portion of the available capacity, and that the user may set the priorities for the active applications. Thus the traffic on the connections of the respective applications can be efficiently adjusted to a reasonable level that can easily be handled by the common communication link. The user can define the size of the portion that should be allocated to a connection of a specific application. This opportunity improves significantly the user friendliness of the terminal equipment, because now the decision on the priorities of the different applications can be made by the user.

The term 'terminal equipment' refers to the equipment used by the subscriber in order to obtain services of a communication network. Such terminal equipment may consist of a mobile phone, a lap top computer, a palm top computer or a combination of any of these, such as a lap top computer connected via a mobile phone and a wireless link to a communication network. Alternatively the terminal equipment may be connected to the communication network via a wireline link such as via a dial-up modem connection or an ADSL (Assymetric Digital Subscriber Line) connection.

In the present invention the capacity of the common communication link is monitored and the size of the portions allocated to the different connections are adjusted according to the capacity available at the link. This allows fast adaptation to rapid changes of the link properties. Such rapid changes may typically occur when the common link is a wireless link, such as a link in by a cellular radio system. If the user moves around in the coverage area of the cellular radio system during ongoing connections, it is possible that the access technology of the link is changed, for instance, from a GPRS (General Packet Radio Service) link to a UMTS (Universal Mobile Telecommunications System) link. In prior art solutions a change to a slower link leads to buffer overflowing and congestions, while a change to a faster link leads to a situation where the capacity of the link is not efficiently utilized. Monitoring of the link and dynamic allocation of the portions to the different connections solve these prior art problems.

The preferred embodiments of the method and the terminal equipment of the invention are disclosed in the dependent claims 2 to 4 and 6 to 9.

## BRIEF DESCRIPTION OF THE DRAWINGS

In the following the present invention will be described in greater/more detail by way of example and with reference to the attached drawings, in which

Figure 1 is a flow diagram of a first preferred embodiment of the method,
Figure 2 is a flow diagram of a second preferred embodiment of the method,
Figure 3 is a flow diagram of a third preferred embodiment of the method,
Figure 4 is a block diagram illustrating a first preferred embodiment of terminal equipment, and
Figures 5 to 7 illustrate adjustment of the transmission rate for different connections.

## DESCRIPTION OF THE PREFERRED EMBODIMENTS

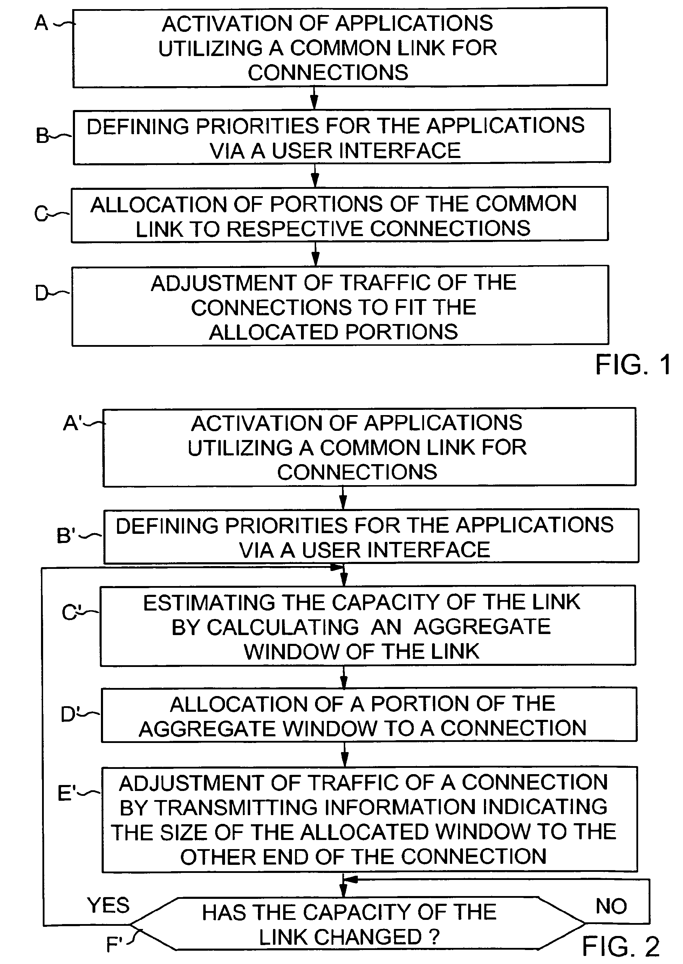

Figure 1 is a flow diagram of a first preferred embodiment of the method. The solution of Figure 1 can be utilized, for instance, in a terminal equipment communicating with an Internet server over a wireless link. One alternative is that the terminal equipment communicates via a wireless link provided by a cellular radio system. In this case the link may be a GPRS (General Packet Radio Service) link, a GSM (Global System for Mobile communications) link, a HSCSD (High Circuit Switched Data) link or a UMTS (Universal Mobile Telecommunications System) link, in which case the link is a relatively slow link. Alternatively the terminal equipment may be connected to the communication network via a wireline link such as via a dial-up modem connection or an ADSL (Assymetric Digital Subscriber Line) connection.

In block A, a plurality of applications are activated to run on the terminal equipment. These applications utilize the common link for connections, such as data connections. The applications utilizing the common link may be, for instance, a streaming audio application, an application receiving stock quote updates, a web browser and an email transfer. The applications may communicate with one or several servers connected to the Internet via the common link by utilizing TCP (Transmission Control Protocol) or any other suitable protocol.

In block B, the user of the terminal equipment defines priorities of the different applications via the user interface of the terminal equipment. One alternative is that each application has a default priority value provided by the manufacturer of the terminal equipment or by the software manufacturer. The user of the terminal equipment, however, has the opportunity to change the default priority values via the keyboard of the terminal equipment.

In block C, the terminal equipment, preferably a congestion manager in the terminal equipment, allocates portions of the capacity of the common link to the connections of the respective applications. The allocation is carried out by taking into account the total capacity of the link and the priorities of the applications defined by the user (or alternatively the default values in case the user has decided not to change the default values).

In block D, the traffic of the connections is adjusted in order to fit the allocated portions. This might be carried out, for instance, by transmitting information indicating the size of the allocated portions from the terminal equipment to the other end of the connections. Thus a server receiving such information is able to adjust the transmission of data to a rate which fits into the allocated portion. Alternatively the terminal equipment might monitor the amount of capacity used by the different applications and transmit suitable messages to the other ends of the connections as soon as it detects that one of the applications has reached the upper limit of the allocated portion. Such adjustment will ensure that the priorities defined by the user are followed on the common communication link. It is also possible to avoid extensive buffering on the transmission path between the terminal equipment and the servers the applications communicate with, because the total amount of data transmitted by the servers will be limited such that the common link is capable of handling it.

Figure 2 is a flow diagram of a second preferred embodiment of the method. The embodiment of Figure 2 is similar to the one described in connection with Figure 1. Thus the embodiment of Figure 2 will be described by mainly pointing out the differences between these embodiments.

In blocks A' and B', the applications are activated and the priorities are defined as in blocks A and B of Figure 1.

In block C' the capacity of the link is estimated by calculating an aggregate window of the link, in other words, the amount of data the link can carry. This calculation can be carried out by taking into account the bandwidth of the link and the delay of the link. The following formula can be used:

$$\text{Window= 2 x (bandwith/bits) x RTT,}$$

where bits represents the number of bits per each byte, and RTT is the Round Trip Time for a connection (time needed for a packet transmitted from the terminal equipment to the server at the other end of the connection and time needed for a packet transmitted from the server to the terminal equipment). If, for instance, the common link is a GPRS link with a bandwidth of 30 kbps and the RTT is 600 ms and the used protocol is TCP, the aggregate window is 2 x (30/8) x 0.6 = 5 kB.

In block D', a portion of the aggregate window is allocated to the connections. In the following it is assumed that the applications and the priorities defined for the applications are:

-    web browser (TCP), priority 80%, and
-    email transfer (TCP), priority 20%.

The window allocated for the connection of the web browser is 5 kB * 0.8=4 kB and the window allocated for the connection of the email transfer is 5 kB * 0.2= 1 kB.

In block E', information indicating the size of the allocated windows for the different connections are transmitted to the other end of the connections. In prior art system utilizing TCP this can be done by utilizing the ACK (acknowledgement) packets, which are used to confirm to the transmitter of a data packet that the data packet in question has been successfully received. The ACK packets can thus include information which is used by the transmitter to calculate how much data the transmitter is allowed to transmit for the moment. Once the calculated amount has been transmitted, then the transmitter has to stop transmitting more data to the receiver. The transmitter (server) is therefore able to adjust the transmission rate according to the size of allocated window.

In block F', the capacity of the common link is monitored. If it turns out in block F' that the capacity of the link has changed, block C' is entered again. Such a situation might occur, for instance, if the common link is handed over to a UMTS connection, for instance. In case of a UMTS connection with a bandwidth of 384 kbps and a delay of 300 ms the new aggregate window will be 2 x (384/8) x 0.3 = 29 kB. In this case the sizes of the portions allocated to the different connections will be changed in block D' in order to utilize the new total capacity of the link. The web browsing will be allocated a window of 29KB x 0.8= 23 kB and the email download a window of 6 kB.

In addition to the blocks shown in Figure 2 the method might include an additional check to see if new applications utilizing the common link have been activated or if an application has been terminated. In such a situation block D' should again be entered in order to reallocate the portions to the applications.

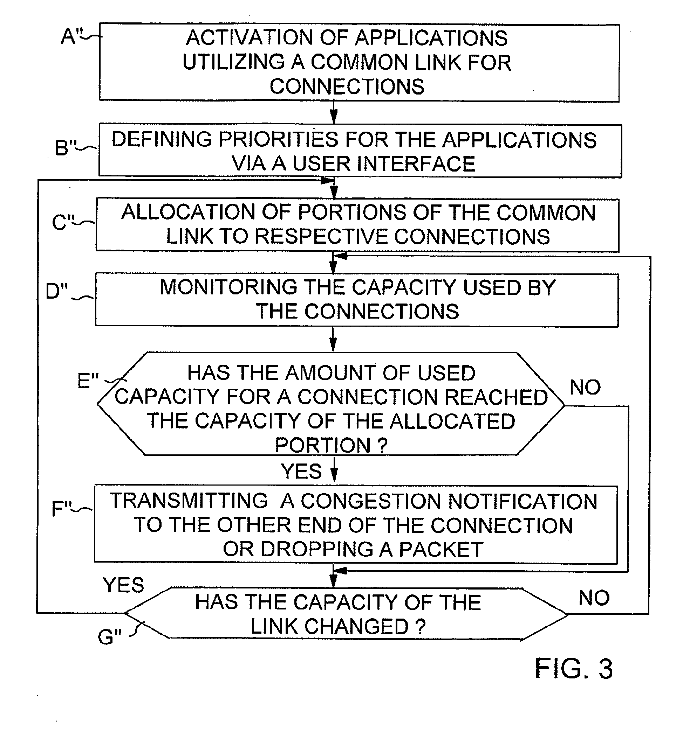

Figure 3 is a flow diagram of a third preferred embodiment of the method. The embodiment of Figure 3 is similar to the one described in connection with Figure 1. Thus the embodiment of Figure 3 will be described by mainly pointing out the differences between these embodiments.

In blocks A" and B", the applications are activated and the priorities are defined as in blocks A and B of Figure 1.

In block C", the terminal equipment, preferably a congestion manager in the terminal equipment, allocates portions of the capacity of the common link to the connections of the respective applications. The allocation is carried out by taking into account the total capacity of the link and the priorities of the applications defined by the user (or alternatively the default values in case the user has decided not to change the default values). In the following it is assumed that the applications and the priorities defined for the applications are:

-    streaming audio (UDP), priority 45%, and
-    stock quote update application (UDPITFRC), priority 55%.

If, for instance, the common link is a GPRS link with a bandwidth of 30 kbps, the connection of the streaming audio application is allocated 30 kbps x 0.45=13.5 kbps and the connection of the stock quote update application is allocated 30 kbps x 0.55= 16.5 kbps.

In blocks D" and E", the capacity used by the connections is monitored and compared with the amount of the allocated capacity. If the capacity utilized by one of the connections reaches the limit allocated to this connection, block F" is entered.

In block F", the traffic of a connection close to the limit is adjusted. This can be done by transmitting a predetermined message to the other end of the connection. The message can be an Explicit Congestion Notification (ECN) which is used to inform the server at the other end of the connection that the transmission rate needs to be lowered.

Previous TCP solutions are known, where a router detecting a potential congestion situation adds ECN to the datastream in order to control the transmitter to lower the transmission rate. Thus prior art transmitters (such as an Internet server) are capable of interpreting ECN and to lower the transmission rate. In the present embodiment, however, it is the terminal equipment used by a subscriber that adds the ECN to the datastream and not a router as in the prior art solutions.

Alternatively the adjustment can be carried out by utilizing packet drops. In this case the terminal equipment drops one or more received packets intended for an application such that the application does not receive them. In this case the transmitter will not receive ACK packets indicating that the transmitted packets have been successfully received. In such situations prior art transmitters would detect that some sort of error or congestion has occurred, lower the used transmission rate, and resend those packets for which no ACK was received.

In block G", the capacity of the common link is monitored. In case it turns out in block G' that the capacity of the link has changed, block C" is entered again.

In addition to the blocks shown in Figure 3 the method might include an additional check to see if new applications utilizing the common link have been activated or if such an application has been terminated. In such a situation block C" should again be entered in order to reallocate the portions to the applications.

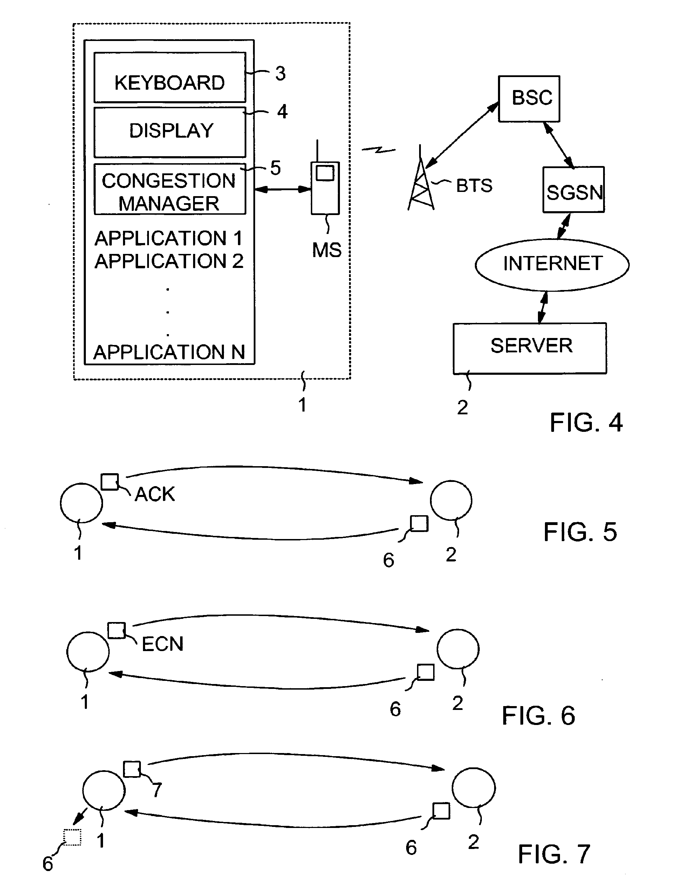

Figure 4 is a block diagram illustrating a first preferred embodiment of terminal equipment. The terminal equipment shown in Figure 4 can be utilized to carry out the methods of Figure 1 to 3.

The terminal equipment 1 of Figure 4 is assumed, by way of example, to consist of a combination of a mobile phone MS and a lap top computer. Naturally this is only an example and in practice the terminal equipment can consist of any terminal equipment providing access for a subscriber to an information system.

In Figure 4 the lap top computer runs simultaneously applications 1 to N, which all utilize a common communication link for connections. In this example the communication link is a wireless link provided by a cellular radio system including a base station BTS, a base station controller BSC and a Serving GPRS Support Node SGSN . The user of the terminal equipment 1 is thus able to use the lap-top computer for viewing a specific web page available at server 2, for instance.

Via the user interface, including a keyboard 3 and display 4, the user can activate applications to run on the terminal equipment. The user can also define the priorities of the applications via the user interface. Thus, the user can, for instance, define that:

- a streaming audio (UDP) is given a priority of 30%,
- a stock quote update application is given a priority of 5%,
- a web browsing application is given a priority of 45%, and
- a email transfer is given a priority of 20%.

The subscriber terminal 1 comprises a congestion manager 5, which can be accomplished by circuitry, one or more computer programs or as a combination of circuitry and a computer program (or programs). The congestion manager 5 controls the applications by allocating to these applications portions of the capacity of the communication link by taking into account the defined priorities. With the above-mentioned simultaneously active applications and the mentioned priorities, the congestion manager could carry out the following allocations when the communication link is a 30 kbps GPRS link with a 600 ms round trip time:

- streaming audio (UDP) 0.3 x 30 = 9 kbps
- stock quote update application 0.05 x 30=1,5 kbps
- aggregate window 2 x (30/8) x 0.6= 5 kB
- web browsing application 0.45 x 5kB =2,25 kB
- email transfer 0.2 x 5 kB= 1 kb.

Figures 5 to 7 illustrate the adjustment of the transmission rate for the different connections.

The adjustment of the web browsing and email transfer applications is illustrated in Figure 5. The congestion manager carries out these adjustments by indicating to each application the size of the window allocated to the connections of the respective applications. The applications include information about the allocated window in the acknowledgement packets ACK transmitted from the terminal equipment 1 to the server 2 as acknowledgements of successful reception of packets. Thus the server 2 is able to calculate the allowed amount of data it may transmit in packets 6 to the terminal equipment.

The adjustment of the streaming audio application is illustrated in Figure 6. In this case the congestion manager does not allocate any specific window to the application. Instead, it monitors the transmission rate used by the server 2. The server is, as in prior art solutions, arranged to increase the transmission rate as long as no errors are detected, in other words, the server receives ACK packets confirming successful reception of the transmitted packets. In case the server transmits packets 6 with a rate which equals the portion allocated to the streaming audio application, the congestion manager adjusts the transmission rate by controlling the streaming audio application to transmit an explicit congestion notification ECN to the server 2. The server will thus detect that the transmission rate is too high and adjust the transmission rate to a lower level.

The adjustment of the stock quote update application is illustrated in Figure 7. In this case the congestion manager does not allocate any specific window to the application. Instead it monitors the transmission rate used by the server 2. The server is, as in prior art solutions, arranged to increase the transmission rate as long as no errors are detected, in other words, the server receives ACK packets confirming successful reception of the transmitted packets. In case the server transmits packets 6 with a rate which equals the portion allocated to the stock quote update application, the congestion manager controls the terminal equipment to drop a packet 6 before this packet has reached the stock quote update application. The server detects that some sort of problem exists as the server does not receive an ACK packet acknowledging reception of the dropped packed. Therefore the server lowers the transmission rate and retransmits the dropped packet.

It is to be understood that the above description and the accompanying Figures are only intended to illustrate the present invention. It will be obvious to those skilled in the art that the invention can be varied and modified also in other ways without departing from the scope of the invention disclosed in the attached claims.

## Claims

1.  A method of controlling the operation of a terminal equipment (1), comprising:

    activating (A', A") at least two applications to utilize a common communication link for connections, and
    defining (B', B") priorities for said applications for use while allocating capacity on said communication link via a user interface (3, 4), **characterized by** comprising:

    estimating (C', C") the capacity of the communication link,
    allocating (D', C") a portion of the capacity of said communication link to said connections, the size of the portion allocated to the respective connections depending on the priorities of the applications,
    adjusting (E', D", E", F") the traffic of the respective connections according to the portion of the communication link allocated to the connections,
    adjusting (E') the traffic of said connections by transmitting information indicating the size of the allocated portions to the other end of the connections, and
    monitoring (F', G") the capacity of said common communication link and repeating said estimating and said allocating if the link capacity has changed.

2.  A method according to claim 1, **characterized by** comprising:

    estimating (C') the capacity of the link by calculating an aggregate window for the link by taking into account the bandwidth of the link and the delay of the link, and
    allocating (D') a portion of the aggregate window to a connection.

3.  A method according to claim 1, **characterized in that** said adjusting comprises:

    monitoring (D") the capacity a connection utilizes,
    comparing (E") the utilized capacity with the capacity of the portion allocated to said connection, and
    transmitting (F") a congestion notification to the other end of said connection if said utilized capacity reaches the capacity of the allocated portion.

4.  A method according to claim 1, **characterized in that** said adjusting comprises:

    monitoring (D") the capacity a packet switched connection utilizes,
    comparing (E") the utilized capacity with the capacity of the portion allocated to said connection, and
    dropping (F") a packet received by the terminal equipment if said utilized capacity reaches the capacity of the allocated portion.

5.  A terminal equipment (1) configured to run simultaneously at least two applications with respective connections via a common communication link, wherein said terminal comprises a user interface (3, 4) and is responsive to information indicating priorities of said applications for use while allocating capacity on said communication link fed to the terminal equipment (1) via said user interface (3, 4), **characterized in that** said terminal equipment (1):

comprises a congestion manager (5) configured to allocate a portion of the capacity of said communication link to each of said connections, the size of the portion allocated to the respective connections depending on the priorities of the applications,
is configured to adjust the traffic of the respective connections according to the portion of the communication link allocated to the connections,
is configured to adjust the traffic of said connections by transmitting information indicating the size of the allocated portions to the other end of the connections, and
is configured to monitor the capacity of said common communication link and to dynamically adjust the portions allocated to the different connections according to the capacity available at the link and the priorities of the applications, if the link capacity has changed.

6. A terminal equipment according to claim 5, **characterized in that** said congestion manager (5) is configured to estimate the capacity of the link by calculating an aggregate window for the link by taking into account the bandwidth of the link and the delay of the link and to allocate a portion of the aggregate window to a connection,

7. A terminal equipment according to claim 5, **characterized in that** in order to adjust the traffic of a packet switched connection according to the portion allocated for said connection the terminal equipment (1) is configured to monitor the capacity said connection utilizes, to compare the utilized capacity with the capacity of the portion allocated to said connection, and to transmit a congestion notification (ECN) to the other end of said connection if said utilized capacity reaches the capacity of the allocated portion.

8. A terminal equipment according to claim 5, **characterized in that** in order to adjust the traffic of a connection according to the portion allocated to said connection the terminal equipment (1) is configured to monitor the capacity said connection utilizes, to compare the utilized capacity with the capacity of the portion allocated to said connection, and transmit a message (7) indicating that a packet is missing to the other end of said connection if said utilized capacity reaches the capacity of the allocated portion.

9. A terminal equipment according to any one of claims 5 to 8, **characterized in that** said connections on said common communication link are Transmission Control Protocol connections.

10. A program for controlling a computer to
receive information via a user interface indicating priorities of at least two applications with respective connections via a common communication link for use while allocating capacity on said communication link, **characterized in that** the program controls a computer to
allocate a portion of the capacity of said communication link to each of said connections, the size of the portion allocated to the respective connections depending on the priorities of the applications,
adjust the traffic of the respective connections according to the portion of the communication link allocated to the connections,
adjust the traffic of said connections by transmitting information indicating the size of the allocated portions to the other end of the connections, and
monitor the capacity of said common communication link and to dynamically adjust the portions allocated to the different connections according to the capacity available at the link and the priorities of the applications, if the link capacity has changed.

11. A computer-readable carrier containing a computer program as defined in claim 10.

**Patentansprüche**

1. Verfahren zum Steuern der Funktion eines Endgerätes (1), das umfasst:

Aktivieren (A', A") von wenigstens zwei Anwendungen zur Nutzung einer gemeinsamen Übertragungsstrecke für Verbindungen, und
Definieren (B', B") von Prioritäten für die die Anwendungen zur Verwendung beim Zuweisen von Kapazität auf der Übertragungsstrecke über eine Benutzerschnittstelle (3, 4), **dadurch gekennzeichnet, dass** das Verfahren umfasst:

Schätzen (C', C'') der Kapazität der Übertragungsstrecke,

Zuweisen (D', C'') eines Teils der Kapazität der Übertragungsstrecke zu den Verbindungen, wobei die Größe des den jeweiligen Verbindungen zugewiesenen Teils von den Prioritäten der Anwendungen abhängt,

Regulieren (E', D'', E'', F'') des Verkehrs der jeweiligen Verbindungen entsprechend dem den Verbindungen zugewiesenen Teil der Übertragungsstrecke,

Regulieren (E') des Verkehrs der Verbindungen durch Übertragen von Informationen, die dem anderen Ende der Verbindungen die Größe der zugewiesenen Teile anzeigen, und

Überwachen (F', G'') der Kapazität der gemeinsamen Übertragungsstrecke und Wiederholen des Schätzens sowie des Zuweisens, wenn sich die Kapazität der Strecke geändert hat.

2. Verfahren nach Anspruch 1, **dadurch gekennzeichnet, dass** es umfasst:

Schätzen (C') der Kapazität der Strecke durch Berechnen eines Aggregate-Fensters (aggregate window) für die Strecke unter Berücksichtigung der Bandbreite der Strecke und der Verzögerung der Strecke, und

Zuweisen (D') eines Teils des Aggregate-Fensters zu einer Verbindung.

3. Verfahren nach Anspruch 1, **dadurch gekennzeichnet, dass** das Regulieren umfasst:

Überwachen (D'') der Kapazität, die eine Verbindung nutzt,

Vergleichen (E'') der genutzten Kapazität mit der Kapazität des der Verbindung zugewiesenen Teils, und

Übertragen (F'') einer Überlastungs-Mitteilung zu dem anderen Ende der Verbindung, wenn die genutzte Kapazität die Kapazität des zugewiesenen Teils erreicht.

4. Verfahren nach Anspruch 1, **dadurch gekennzeichnet, dass** das Regulieren umfasst:

Überwachen (D'') der Kapazität, die eine paketvermittelte Verbindung nutzt,

Vergleichen (E'') der genutzten Kapazität mit der Kapazität des der Verbindung zugewiesenen Teils, und

Verwerfen (F'') eines durch das Endgerät empfangenen Paketes, wenn die genutzte Kapazität die Kapazität des zugewiesenen Teils erreicht.

5. Endgerät (1), das so konfiguriert ist, dass es gleichzeitig wenigstens zwei Anwendungen mit jeweiligen Verbindungen über eine gemeinsame Übertragungsstrecke ausführt, wobei das Endgerät eine Benutzerschnittstelle (3, 4) umfasst und auf Informationen, die Prioritäten der Anwendungen anzeigen, zur Verwendung beim Zuweisen von Kapazität auf der Übertragungsstrecke anspricht, die dem Endgerät (1) über die Benutzerschnittstelle (3, 4) zugeführt werden, **dadurch gekennzeichnet, dass** das Endgerät (1):

einen Überlastungs-Manager (5) umfasst, der so konfiguriert ist, dass er jeder der Verbindungen einen Teil der Kapazität der Übertragungsstrecke zuweist, wobei die Größe des den jeweiligen Verbindungen zugewiesenen Teils von den Prioritäten der Anwendungen abhängt,

so konfiguriert ist, dass es den Verkehr der jeweiligen Verbindung entsprechend dem den Verbindungen zugewiesenen Teil der Übertragungsstrecke reguliert,

so konfiguriert ist, dass es den Verkehr der Verbindungen reguliert, indem es Informationen, die die Größe der zugewiesenen Teile anzeigen, zu dem anderen Ende der Verbindungen überträgt, und

so konfiguriert ist, dass es die Kapazität der gemeinsamen Übertragungsstrecke überwacht und die den verschiedenen Verbindungen zugewiesenen Teile dynamisch entsprechend der auf der Strecke verfügbaren Kapazität und den Prioritäten der Anwendungen reguliert, wenn sich die Kapazität der Strecke geändert hat.

6. Endgerät nach Anspruch 5, **dadurch gekennzeichnet, dass** der Überlastungs-Manager (5) so konfiguriert ist, dass er die Kapazität der Strecke schätzt, indem er ein Aggregate-Fenster (aggregate window) für die Strecke unter Berücksichtigung der Bandbreite der Strecke und der Verzögerung der Strecke berechnet und einer Verbindung einen Teil des Aggregate-Fensters zuweist.

7. Endgerät nach Anspruch 5, **dadurch gekennzeichnet, dass** das Endgerät (1) so konfiguriert ist, dass es, um den Verkehr einer paketvermittelten Verbindung entsprechend dem für diese Verbindung zugewiesenen Teil zu regulieren, die Kapazität überwacht, die die Verbindung nutzt, die genutzte Kapazität mit der Kapazität des der Verbindung zugewiesenen Teils vergleicht und eine Überlastungs-Mitteilung (ECN) zu dem anderen Ende der Verbindung überträgt, wenn die genutzte Kapazität die Kapazität des zugewiesenen Teils erreicht.

**8.** Endgerät nach Anspruch 5, **dadurch gekennzeichnet, dass** das Endgerät (1) so konfiguriert ist, dass es, um den Verkehr einer Verbindung entsprechend dem der Verbindung zugewiesenen Teil zu regulieren, die Kapazität überwacht, die die Verbindung nutzt, die genutzte Kapazität mit der Kapazität des der Verbindung zugewiesenen Teils vergleicht, und eine Nachricht (7), die anzeigt, dass ein Paket fehlt, zu dem anderen Ende der Verbindung überträgt, wenn die genutzte Kapazität die Kapazität des zugewiesenen Teils erreicht.

**9.** Endgerät nach einem der Ansprüche 5 bis 8, **dadurch gekennzeichnet, dass** die Verbindungen auf der gemeinsamen Übertragungsstrecke TCP-Verbindungen (Transmission Control Protocol connections) sind.

**10.** Verfahren, mit dem ein Computer so gesteuert wird, dass er
über eine Benutzerschnittstelle Informationen empfängt, die Prioritäten wenigstens zweier Anwendungen mit jeweiligen Verbindungen über eine gemeinsame Übertragungsstrecke zur Verwendung beim Zuweisen von Kapazität auf der Übertragungsstrecke anzeigen, **dadurch gekennzeichnet, dass** das Programm einen Computer so steuert, dass er:

jeder der Verbindungen einen Teil der Kapazität der Übertragungsstrecke zuweist, wobei die Größe des den jeweiligen Verbindungen zugewiesenen Teils von den Prioritäten der Anwendungen abhängt,
den Verkehr der jeweiligen Verbindungen entsprechend dem den Verbindungen zugewiesenen Teil der Übertragungsstrecke reguliert,
den Verkehr der Verbindungen reguliert, indem er Informationen, die die Größe der zugewiesenen Teile anzeigen, zu dem anderen Ende der Verbindungen überträgt, und

die Kapazität der gemeinsamen Übertragungsstrecke überwacht und die den verschiedenen Verbindungen zugewiesenen Teile entsprechend der auf der Strecke verfügbaren Kapazität und den Prioritäten der Anwendungen dynamisch reguliert, wenn sich die Kapazität der Strecke geändert hat.

**11.** Computerlesbarer Träger, der ein Computerprogramm nach Anspruch 10 beinhaltet.

**Revendications**

**1.** Procédé de commande du fonctionnement d'un équipement terminal (1), comprenant ;
l'activation (A', A") d'au moins deux applications pour utiliser une liaison de communication commune pour les connexions, et
la définition (B', B") de priorités pour lesdites applications pour utilisation lors de l'allocation de capacité sur ladite liaison de communication par l'intermédiaire d'une interface utilisateur (3, 4), **caractérisé en ce qu'**il comprend :

l'estimation (C', C") de la capacité de la liaison de communication,
l'allocation (D', C") d'une partie de la capacité de ladite liaison de communication auxdites connexions, la taille de la partie allouée aux connexions respectives dépendant des priorités des applications,
l'ajustement (E', D', E", F") du trafic des connexions respectives en fonction de la partie de la liaison de communication allouée, aux connexions,
l'ajustement (E') du trafic desdites connexions par transmission d'informations indiquant la taille des parties allouées à l'autre extrémité des connexions, et
la surveillance (F", G") de la capacité de ladite liaison de communication commune, de la répétition de ladite estimation et de ladite allocation si la capacité de liaison a changé.

**2.** Procédé selon la revendication 1, **caractérisé en ce qu'**il comprend :

l'estimation (C') de la capacité de la liaison par calcul d'une fenêtre agrégée pour la liaison en tenant compte de la bande passante de la liaison et du retard de la liaison, et
l'allocation (D') d'une partie de la fenêtre agrégée à une connexion.

**3.** Procédé selon la revendication 1, **caractérisé en ce que** ledit ajustement comprend :

la surveillance (D") de la capacité qu'une connexion utilise,
la comparaison (E") de la capacité utilisée, à la capacité de la partie allouée à ladite connexion, et
la transmission (F") d'une notification d'encombrement à l'autre extrémité de ladite connexion si ladite capacité utilisée atteint la capacité de la partie allouée.

4. Procédé selon la revendication 1, **caractérisé en ce que** ledit ajustement comprend :

la surveillance (D") de la capacité qu'une connexion à commutation de paquets utilise,
la comparaison (E") de la capacité utilisée à la capacité de la partie allouée à ladite connexion; et
le rejet (F") d'un paquet reçu par l'équipement terminal si ladite capacité utilisée atteint la capacité de la partie allouée.

5. Équipement terminal (1) configuré pour exécuter simultanément au moins deux applications avec des connexions respectives par l'intermédiaire une liaison de communication commune, où ledit terminal comprend une interface utilisateur (3, 4) et est répondeur aux informations indiquant les priorités desdites applications pour utilisation lors de l'allocation de capacité sur ladite liaison de communication reliée à l'équipement terminal (1) par l'intermédiaire de ladite interface utilisateur (3, 4) **caractérisé en ce que** ledit équipement terminal (1) :

comprend un gestionnaire d'encombrement (5) configuré pour allouer une partie de la capacité de ladite liaison de communication à chacune desdites connexions, la taille de la partie allouée aux connexions respectives dépendant, des priorités des applications,
est configuré pour ajuster le trafic des connexions respectives en fonction de la partie de la liaison de communication allouée aux connexions,
est configuré pour ajuster le trafic desdites connexions par transmission d'informations indiquant la taille des parties allouées à l'autre extrémité des connexions, et
est configuré pour surveiller la capacité de ladite liaison de communication commune et pour ajuster de façon dynamique les parties allouées aux différentes connexions en fonction de la capacité disponible au niveau de la liaison et des priorités des applications, si la capacité de liaison a changé.

6. Équipement terminal selon la revendication 5, **caractérisé en ce que** ledit gestionnaire d'encombrement (5) est configuré pour estimer la capacité de la liaison par calcul d'une fenêtre agrégée pour la liaison en tenant compte de la bande passante de la liaison et du retard de la liaison et allouer une partie de la fenêtre agrégée à une connexion.

7. Équipement terminal selon la revendication 5, **caractérisé en ce qu'**afin d'ajuster le trafic d'une connexion à commutation de paquets en fonction de la partie allouée pour ladite connexion, l'équipement terminal (1) est configuré pour surveiller la capacité que ladite connexion utilise, pour comparer la capacité utilisée à la capacité de la partie allouée à ladite connexion, et transmettre une notification d'encombrement (ECN) à l'autre extrémité de ladite connexion si ladite capacité utilisée atteint la capacité de la partie allouée.

8. Équipement terminal selon la revendication 5, **caractérisé en ce qu'**afin d'ajuster le trafic d'une connexion en fonction de la partie allouée à ladite connexion, l'équipement terminal (1) est configuré pour surveiller la capacité que ladite connexion utilise, pour comparer la capacité utilisée à la capacité de la partie allouée à ladite connexion, est un message (7) indiquant qu'un paquet est manquant à l'autre extrémité de ladite connexion si ladite capacité utilisée atteint la capacité de la partie allouée.

9. Équipement terminal selon l'une quelconque des revendications 5 à 8, **caractérisé en ce que** lesdites connexions sur ladite liaison de communication commune sont des connexions de protocole de contrôle de transmission.

10. Programme pour commander à un ordinateur de
recevoir des Informations par l'intermédiaire d'une interface utilisateur indiquant des priorités d'au moins deux applications avec des connexions respectives par l'intermédiaire d'une liaison de communication commune pour utilisation lors de l'allocation de capacité sur ladite liaison de communication, **caractérisé en ce que** le programme commande à un ordinateur de:

- allouer une partie de la capacité de ladite liaison de communication à chacune desdites connexions, la taille de la partie allouée aux connexions respectives dépendant des priorités des applications,
- ajuster le trafic des connexions respectives en fonction de la partie de la liaison de communication allouée aux connexions,
- ajuster le trafic desdites connexions par transmission d'informations indiquant la taille des parties allouées à l'autre extrémité des connexions, et
- surveiller la capacité de ladite liaison de communication commune et ajuster de façon dynamique les parties allouées aux différentes connexions en fonction de la capacité disponible au niveau de la liaison et des priorités des applications, si la capacité de liaison a changé.

11. Support lisible par ordinateur contenant in programme informatique tel que défini dans la revendication 10.

A —| **ACTIVATION OF APPLICATIONS UTILIZING A COMMON LINK FOR CONNECTIONS**

↓

B —| **DEFINING PRIORITIES FOR THE APPLICATIONS VIA A USER INTERFACE**

↓

C —| **ALLOCATION OF PORTIONS OF THE COMMON LINK TO RESPECTIVE CONNECTIONS**

↓

D —| **ADJUSTMENT OF TRAFFIC OF THE CONNECTIONS TO FIT THE ALLOCATED PORTIONS**

**FIG. 1**

A' —| **ACTIVATION OF APPLICATIONS UTILIZING A COMMON LINK FOR CONNECTIONS**

↓

B' —| **DEFINING PRIORITIES FOR THE APPLICATIONS VIA A USER INTERFACE**

↓

C' —| **ESTIMATING THE CAPACITY OF THE LINK BY CALCULATING AN AGGREGATE WINDOW OF THE LINK**

↓

D' —| **ALLOCATION OF A PORTION OF THE AGGREGATE WINDOW TO A CONNECTION**

↓

E' —| **ADJUSTMENT OF TRAFFIC OF A CONNECTION BY TRANSMITTING INFORMATION INDICATING THE SIZE OF THE ALLOCATED WINDOW TO THE OTHER END OF THE CONNECTION**

↓

**YES** ⟨ **HAS THE CAPACITY OF THE LINK CHANGED ?** ⟩ **NO**

F'

**FIG. 2**

EP 1 434 131 B1

A" — ACTIVATION OF APPLICATIONS
UTILIZING A COMMON LINK FOR
CONNECTIONS

B" — DEFINING PRIORITIES FOR THE APPLICATIONS
VIA A USER INTERFACE

C" — ALLOCATION OF PORTIONS OF THE COMMON
LINK TO RESPECTIVE CONNECTIONS

D" — MONITORING THE CAPACITY USED BY
THE CONNECTIONS

E" — HAS THE AMOUNT OF USED
CAPACITY FOR A CONNECTION REACHED
THE CAPACITY OF THE ALLOCATED
PORTION ?        NO

YES

F" — TRANSMITTING A CONGESTION NOTIFICATION
TO THE OTHER END OF THE CONNECTION
OR DROPPING A PACKET

YES        HAS THE CAPACITY OF THE        NO
LINK CHANGED ?
G"

FIG. 3

FIG. 4

FIG. 5

FIG. 6

FIG. 7

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9198261 A

- US 5745758 A

**Non-patent literature cited in the description**

- **VOIGT T et al.** Scheduling TCP in the Nemesis operating system. Kluwer ACAD. Publishers, 2000, 63-79